# EUROPEAN PATENT APPLICATION

(11) **EP 2 474 355 A1**
(43) Date of publication of application: **11.07.2012**
(21) Application number: 10813676.3
(22) Date of filing: 30.08.2010
(51) Int. Cl.: B01J 23/78, C01B 3/40

(54) **HYDROCARBON GAS REFORMING CATALYST, METHOD FOR PRODUCING SAME, AND METHOD FOR PRODUCING SYNTHETIC GAS**

(30) Priority: 02.09.2009 JP 2009202669
(71) Applicant: Murata Manufacturing Co., Ltd., Kyoto 617-8555 (JP)
(72) Inventor: SAITO, Yoshinori, Nagaokakyo-shi Kyoto 617-8555 (JP); SATO, Hideto, Nagaokakyo-shi Kyoto 617-8555 (JP)
(74) Representative: Zinnecker, Armin
(86) International application number: PCT/JP2010/064680
(87) International publication number: WO 2011/027727

(57) **Abstract**

The present invention provides a hydrocarbon gas reforming catalyst for efficiently producing hydrogen and carbon monoxide by carrying out reaction of a hydrocarbon source material gas and carbon dioxide, water vapor, and oxygen while restraining the deposition of carbon; a method of manufacturing the catalyst; and a method of manufacturing a synthesized gas using the hydrocarbon gas reforming catalyst. The hydrocarbon gas reforming catalyst is manufactured by producing the Ni-SrTiO₃ solid solution and/or the Ni-SrZrO₃ solid solution, which is a perovskite compound consisting of Ni forming the solid solution, by thermally treating a source material containing Sr and a source material containing Ti and/or Zr in the presence of NiO.

SrCO₃ is used as a Sr source material; TiO₂ is used as a Ti source material; and ZrO₂ is used as a Zr source material.

An already reduced hydrocarbon gas reforming catalyst containing metal Ni in combination with SrTiO₃ and/or SrZrO₃ as main components is obtained by subjecting the hydrocarbon gas reforming catalyst as described above to reduction treatment.

## Description

### TECHNICAL FIELD

The present invention relates to a catalyst for reforming a hydrocarbon gas used in manufacturing a synthesized gas containing hydrogen and carbon monoxide by reforming a hydrocarbon source material gas, a method of manufacturing the same, and a method of manufacturing a synthesized gas using the catalyst for reforming a hydrocarbon gas.

### BACKGROUND ART

Various hydrocarbon gases are generated from the field of art such as petroleum refining or petrochemistry; however, these gases are not necessarily utilized efficiently as source material gases of various substances, so that a method of conversion into more effective substances has been demanded.

Under such circumstances, as a method of manufacturing a synthesized gas containing hydrogen and carbon monoxide by reforming a hydrocarbon gas, there are known methods such as reforming hydrocarbon with carbon dioxide, reforming hydrocarbon with water vapor, and reforming saturated hydrocarbon by using carbon dioxide and water vapor in combination in which both of carbon dioxide and water vapor are allowed to react in the presence of a catalyst.

Reforming hydrocarbon with carbon dioxide is suitable for manufacturing a synthesized gas having a comparatively high carbon monoxide concentration by allowing saturated hydrocarbon such as methane and carbon dioxide to react in the presence of a catalyst.

On the other hand, reforming hydrocarbon with water vapor is suitable for manufacturing a synthesized gas having a comparatively high hydrogen concentration by allowing saturated hydrocarbon such as methane and water vapor to react in the presence of a catalyst.

Also, the method of reforming saturated hydrocarbon such as methane by using carbon dioxide and water vapor in combination in which both of carbon dioxide and water vapor are allowed to react in the presence of a catalyst has an advantage in that the ratio of hydrogen and carbon monoxide in the synthesized gas to be manufactured can be adjusted by adjusting the ratio of carbon dioxide and water vapor.

By such reforming of a hydrocarbon gas, carbon may be deposited on the catalyst during the process of decomposition of the hydrocarbon. The degree of this carbon deposition varies depending on a hydrocarbon reforming condition. It is reported that carbon is most liable to be deposited in the reforming of hydrocarbon with carbon dioxide, and that the amount of carbon deposition is comparatively small in the reforming of hydrocarbon with water vapor. However, the carbon deposited on the catalyst is gradually accumulated to lower the catalyst activity. When carbon is deposited in a large amount, there is a fear of clogging the reaction tube. Therefore, even in the reforming of hydrocarbon with water vapor, carbon deposition is restrained generally by setting the ratio of water vapor to hydrocarbon (hereafter, "water vapor/hydrocarbon ratio") to be high so as to introduce water vapor in an excessive amount.

a Then, as a catalyst for reforming hydrocarbon with carbon dioxide or water vapor, there are known a nickel catalyst in which nickel is carried on a base such as alumina, a ruthenium catalyst in which ruthenium is carried (See Patent Document 1), and further a rhodium catalyst in which rhodium is carried on a base such as alumina (See Patent Document 2) and the like.

Also, in order to restrain carbon deposition and improve the activity at low temperature, there are known catalysts obtained by carrying rhodium, cobalt, or nickel as an active component on a carrier of lanthanum aluminate, strontium titanate, or barium titanate, which is a perovskite type compound (See Patent Document 3).

A nickel catalyst typical as a catalyst for reforming hydrocarbon with water vapor in which nickel is carried on a base such as alumina is liable to cause carbon deposition on the catalyst. Therefore, in order to restrain the lowering of activity by carbon deposition, there is a need to perform a reaction of reforming hydrocarbon with water vapor under a condition of a water vapor/hydrocarbon ratio in which water vapor is excessive relative to the hydrocarbon. However, in order to make the water vapor excessive, there is raised a problem in that the energy consumption increases in the process of vaporizing water. Also, there is a problem in that it is not suitable for use that needs a synthesized gas having a high carbon monoxide concentration such as fuel synthesis because the carbon monoxide concentration in the composition of the synthesized gas to be manufactured decreases. Further, in the case of attempting to reform hydrocarbon with carbon dioxide or to reform hydrocarbon by using carbon dioxide and water vapor in combination, there is a problem in that a stable and efficient operation of the apparatus is difficult with the above nickel catalyst because it is a reforming reaction that is more liable to generate the carbon deposition.

Also, a ruthenium catalyst as shown in Patent Document 1 has a function of restraining carbon deposition, so that the carbon deposition is less in amount as compared with a nickel catalyst, and also maintenance of the activity is easy. However, there is a problem in that, when unsaturated hydrocarbon such as ethylene coexists in a source material, thermal carbon deposition and a decrease in the activity are liable to occur, so that, even if the ruthenium catalyst produces an effect of restraining the carbon deposition, the catalyst is poisoned by unsaturated hydrocarbon or the like contained in the source material gas, leading to a decrease in the activity.

Also, it is assumed that a rhodium catalyst in which rhodium is carried on a base such as alumina, as shown in Patent Document 2, also raises a similar problem.

Since having high activity, a catalyst having a perovskite type complex oxide as a carrier as shown in Patent Document 3 can restrain carbon deposition even if supply of water vapor is lowered in the water vapor reforming; however, the catalyst is still unable to restrain the carbon deposition in carbon dioxide reforming in which carbon deposition is liable to occur.

### PRIOR ART DOCUMENTS

### PATENT DOCUMENTS

Patent Document 1: Japanese Patent Application Laid-open (JP-A) No. 08-231204
Patent Document 2: Japanese Patent Application Laid-open (JP-A) No. 09-168740
Patent Document 3: Japanese Patent Application Laid-open (JP-A) No. 2006-346598

### SUMMARY OF THE INVENTION

### Problems to be solved by the invention

The present invention solves the aforementioned problems, and an object of the invention is to provide a catalyst for reforming a hydrocarbon gas capable of efficiently producing hydrogen and carbon monoxide by carrying out reaction of a hydrocarbon source material gas and carbon dioxide, water vapor, and oxygen while restraining the deposition of carbon, a method of manufacturing the same, and a method of manufacturing a synthesized gas using the produced catalyst for reforming a hydrocarbon gas.

### Means for solving the problems

In order to solve the aforementioned problems, a catalyst for reforming a hydrocarbon gas of the present invention is a catalyst used for reforming a hydrocarbon source material gas and producing a synthesized gas containing carbon monoxide and hydrogen, containing NiO and SrTiO₃ as main components, and is **characterized in that** the catalyst contains a Ni-SrTiO₃ solid solution in which 1 to 3 parts by mole of Ni is dissolved in 100 parts by mole of SrTiO₃.

This hydrocarbon gas reforming catalyst containing a Ni-SrTiO₃ solid solution in which 1 to 3 parts by mole of Ni is dissolved in 100 parts by mole of SrTiO₃ is desirable to have a ratio I₅₀₀/I₇₀₀ of reflection intensity I₅₀₀ at a wavelength of 500 nm to reflection intensity I₇₀₀ at a wavelength of 700 nm within a range of 0.3 to 0.6.

Another catalyst for reforming a hydrocarbon gas of the present invention is a catalyst used for reforming a hydrocarbon source material gas and producing a synthesized gas containing carbon monoxide and hydrogen, containing NiO and SrZrO₃ as main components, and is **characterized in that** the catalyst contains a Ni-SrZrO₃ solid solution in which 1 to 2 parts by mole of Ni is dissolved in 100 parts by mole of SrZrO₃.

This hydrocarbon gas reforming catalyst containing a Ni-SrZrO₃ solid solution in which 1 to 2 parts by mole of Ni is dissolved in 100 parts by mole of SrZrO₃ is desirable to have a ratio I₅₀₀/I₇₀₀ of reflection intensity I₅₀₀ at a wavelength of 500 nm to reflection intensity I₇₀₀ at a wavelength of 700 nm within a range of 0.8 or lower.

Still another catalyst for reforming a hydrocarbon gas of the present invention is a catalyst used for reforming a hydrocarbon source material gas and producing a synthesized gas containing carbon monoxide and hydrogen, containing NiO, SrTiO₃, and SrZrO₃ as main components, and is **characterized in that** the catalyst contains a Ni-SrTiO₃ solid solution in which Ni is dissolved in SrTiO₃ and a Ni-SrZrO₃ solid solution in which Ni is dissolved in SrZrO₃.

This catalyst for reforming a hydrocarbon gas containing the Ni-SrTiO₃ solid solution in which Ni is dissolved in SrTiO₃ and the Ni-SrZrO₃ solid solution in which Ni is dissolved in SrZrO₃ is desirable to have a ratio I₅₀₀/I₇₀₀ of reflection intensity I₅₀₀ at a wavelength of 500 nm to reflection intensity I₇₀₀ at a wavelength of 700 nm within a range of 0.3 to 0.8.

A method of manufacturing a hydrocarbon gas reforming catalyst of the present invention is a method of manufacturing the hydrocarbon gas reforming catalyst as described in claims 1 to 6 and involves a step of producing the Ni-SrTiO₃ solid solution and/or the Ni-SrZrO₃ solid solution, which is a perovskite compound containing Ni forming the solid solution, by thermally treating a containing source material containing Sr and a source material containing Ti and/or Zr in the presence of NiO.

In the method of manufacturing a hydrocarbon gas reforming catalyst of the present invention, it is preferable to use SrCO₃ as the source material containing Sr, TiO₂ as the source material containing Ti, and ZrO₂ as the source material containing Zr.

An already reduced hydrocarbon gas reforming catalyst of the present invention is a catalyst obtained by subjecting the hydrocarbon gas reforming catalyst described in one of claims 1 to 6 to reduction treatment and is characterized by containing metal Ni and SrTiO₃ and/or SrZrO₃ as main components.

A method of manufacturing the already reduced hydrocarbon gas reforming catalyst of the present invention is characterized by involving a step of subjecting the hydrocarbon gas reforming catalyst described in one of claims 1 to 6 to reduction treatment by heating in an atmosphere containing hydrogen.

Also, the method of manufacturing a synthesized gas of the present invention is characterized by involving the steps of: preparing a reformer filled with the catalyst described in one of claims 1 to 6 and 9, and producing a synthesized gas containing carbon monoxide and hydrogen by passing a hydrocarbon source material gas in combination with a gas containing carbon dioxide and/or water vapor and/or oxygen through the reformer and bringing the gases into contact with the catalyst.

### EFFECTS OF THE INVENTION

The hydrocarbon gas reforming catalyst of the present invention (claim 1) containing a Ni-SrTiO₃ solid solution in which 1 to 3 parts by mole of Ni is dissolved in 100 parts by mole of SrTiO₃ can restrain deposition of carbon at the time of reforming reaction. Consequently, use of this hydrocarbon gas reforming catalyst can efficiently produce hydrogen and carbon monoxide by carrying out reaction of a hydrocarbon source material gas and carbon dioxide and/or water vapor and/or oxygen while restraining the deposition of carbon.

In the case the hydrocarbon gas reforming catalyst of the present invention (claim 1) has a ratio I₅₀₀/I₇₀₀ of reflection intensity I₅₀₀ at a wavelength of 500 nm to reflection intensity I₇₀₀ at a wavelength of 700 nm within a range of 0.3 to 0.6, Ni forms a solid solution with SrTiO₃, which is a perovskite compound, in the ratio defined by the present invention and thus it is made possible to obtain the hydrocarbon gas reforming catalyst excellent in the carbon deposition resistance.

The hydrocarbon gas reforming catalyst of the present invention (claim 2) containing a Ni-SrZrO₃ solid solution in which 1 to 2 parts by mole of Ni is dissolved in 100 parts by mole of SrZrO₃ can also restrain deposition of carbon at the time of reforming reaction. Consequently, use of this hydrocarbon gas reforming catalyst can efficiently produce hydrogen and carbon monoxide by carrying out reaction of a hydrocarbon source material gas and carbon dioxide and/or water vapor and/or oxygen while restraining the deposition of carbon.

In the case the hydrocarbon gas reforming catalyst of the present invention (claim 2) has a ratio I₅₀₀/I₇₀₀ of reflection intensity I₅₀₀ at a wavelength of 500 nm to reflection intensity I₇₀₀ at a wavelength of 700 nm witnin a range of 0.8 or lower, Ni forms a solid solution with SrZrO₃, which is a perovskite compound, in the ratio defined by the present invention and thus it is made possible to obtain the hydrocarbon gas reforming catalyst excellent in the carbon deposition resistance.
Additionally, it is confirmed that this hydrocarbon gas reforming catalyst containing Ni forming a solid solution with SrZrO₃ within a range of 1 to 2 parts by mole to 100 parts by mole of SrZrO₃ generally has a ratio I₅₀₀/I₇₀₀ not exceeding 0.8 and often within a range of 0.3 to 0.8.

The hydrocarbon gas reforming catalyst of the present invention (claim 3) containing a Ni-SrTiO₃ solid solution containing Ni forming a solid solution with SrTiO₃ and a Ni-SrZrO₃ solid solution containing Ni forming a solid solution with SrZrO₃ can also restrain deposition of carbon at the time of reforming reaction. Consequently, use of this hydrocarbon gas reforming catalyst can efficiently produce hydrogen and carbon monoxide by carrying out reaction of a hydrocarbon source material gas and carbon dioxide and/or water vapor and/or oxygen while restraining the deposition of carbon.

In the case the hydrocarbon gas reforming catalyst of the present invention (claim 3 ) has a ratio I₅₀₀/I₇₀₀ of reflection intensity I₅₀₀ at a wavelength of 500 nm to reflection intensity I₇₀₀ at a wavelength of 700 nm within a range of 0.3 to 0.8, the catalyst contains a Ni-SrTiO₃ solid solution containing Ni forming a solid solution with SrTiO₃ and a Ni-SrZrO₃ solid solution containing Ni forming a solid solution with SrZrO₃ and thus it is made possible to obtain the hydrocarbon gas reforming catalyst excellent in the carbon deposition resistance.

In addition, since the method of manufacturing a hydrocarbon gas reforming catalyst of the present invention involves a step of producing the Ni-SrTiO₃ solid solution and/or the Ni-SrZrO₃ solid solution, which is a perovskite compound containing Ni forming the solid solution, by thermally treating a source material containing Sr and a source material containing Ti and/or Zr in the presence of NiO, it is made possible to efficiently produce the hydrocarbon gas reforming catalyst of the present invention which is excellent in dispersibility of Ni and can restrain carbon deposition in reforming under the condition in which carbon deposition is liable to occur.

In addition, in the present invention, the perovskite compound (Ni-SrTiO₃ and/or Ni-SrZrO₃) containing Ni forming the solid solution is synthesized by thermally treating source materials in the presence of NiO; however, a starting material of NiO is not necessarily limited to NiO. For example, in the case metal Ni is used as the starting material, the metal Ni is oxidized during the thermal treatment to be NiO and therefore, the same effect can be caused as that in the case of using NiO as the starting material. Consequently, various kinds of Ni compounds to be NiO can be used during the step of thermal treatment.

A hydrocarbon gas reforming catalyst of the present invention can be more efficiently produced by using SrCO₃ as a source material containing Sr, TiO₂ as a source material containing Ti, and ZrO₂ as a source material containing Zr.

An already reduced hydrocarbon gas reforming catalyst of the present invention is obtained by subjecting a hydrocarbon gas reforming catalyst of the present invention to reduction treatment and is capable of restraining carbon deposition in reforming under a condition in which the carbon deposition is liable to occur since metal Ni is sufficiently dispersed in SrTiO₃ and/or SrZrO₃ by the reduction treatment.

A hydrocarbon gas reforming catalyst in which metal Ni is sufficiently dispersed in SrTiO₃ and/or SrZrO₃ and capable of restraining carbon deposition is efficiently produced by carrying out the reduction treatment by thermal treatment in an atmosphere containing hydrogen.

Also, according to the method of manufacturing a synthesized gas of the present invention, a synthesized gas containing hydrogen and carbon monoxide can be efficiently manufactured from a hydrocarbon source material gas while restraining carbon deposition when the catalyst is used in any of the reforming reactions of reforming with carbon dioxide in which reforming is carried out by reaction of hydrocarbon and carbon dioxide with each other, reforming with water vapor in which reforming is carried out by reaction of hydrocarbon and water vapor with each other, combination reforming with use of both of carbon dioxide and water vapor, and reforming by partial oxidation reaction of methane.

Further, the CO₂ reforming reaction, partial oxidation reaction, and water vapor reforming reaction of methane using a hydrocarbon gas reforming catalyst according to the present invention are reactions represented as the following formulae (1), (2), and (3) for obtaining a synthesized gas containing hydrogen (H₂) and carbon monoxide (CO) using methane (CH₄) in combination with a carbon dioxide gas (CO₂), an oxygen gas (O₂) , and water vapor (H₂O) as source materials.

CH₄ + CO₂ ⇒ 2H₂ + 2CO (1)

CH₄ + 1/2O₂ ⇒ 2H₂ + CO (2)

CH₄ + H₂O ⇒ 3H₂ + CO (3)

Further, in various kinds of combination reforming reactions of methane, generally, two or all three kinds among the CO₂ reforming reaction, partial oxidation reaction, and water vapor reforming reaction shown in the formulae (1) to (3) may be combined to obtain a synthesized gas with H₂/CO = 3 to 1.

### BRIEF EXPLANATION OF DRAWINGS

FIG. 1 is a view showing measurement results of reflection spectra measured for catalysts produced in examples of the present invention.
FIG. 2 is a view showing a TEM image of the catalyst A produced in an example of the present invention.
FIG. 3 is a view showing EDX mapping results of the Ni component in the same field of view as that of the TEM image of the catalyst A produced in an example of the present invention.
FIG. 4 is a view showing EDX mapping results of the Sr component in the same field of view as that of the TEM image of the catalyst A produced in an example of the present invention.
FIG. 5 is a view showing EDX mapping results of the Ti component in the same field of view as that of the TEM image of the catalyst A produced in an example of the present invention.
FIG. 6 is a view showing measurement results of an EDX spectrum obtained by point analysis for prescribed measurement points of prescribed SrTiO₃ grains by EDX under the condition of an integrated time of 300 seconds in order to investigate to what a degree the Ni component forms a solid solution in the SrTiO3 grains in the catalyst A produced in an example of the present invention.
FIG. 7 is a view showing a schematic constitution of a testing apparatus used for carrying out a method of manufacturing a synthesized gas according to an example of the present invention.

### MODE FOR CARRYING OUT THE INVENTION

Hereafter, the features of the present invention will be described in further detail with reference to examples of the present invention.

### EXAMPLE 1

### [1] Manufacture of hydrocarbon gas reforming catalyst

### (1) Manufacture of hydrocarbon gas reforming catalyst A according to example of the present invention

Strontium carbonate (SrCO₃) and titanium oxide (TiO₂) were weighed so as to attain a molar ratio of 1.0 _{:} 1.0, and further, nickel oxide (NiO) was added and mixed so as to attain a ratio of 2.0 wt.% relative to SrTiO₃ to be produced. Subsequently, a binder was added to this mixture for granulation so as to obtain a spherical granulated body having a diameter of 2 to 5 mm.

The obtained granular body was then fired under the condition of 1100°C for 1 h in air to obtain a hydrocarbon gas reforming catalyst (sample) A.

Thereafter, this hydrocarbon gas reforming catalyst (sample) A was subjected to x-ray diffraction measurement. As a result, it was confirmed that the obtained fired body is a mixed body of NiO phase and SrTiO₃ phase according to the obtained diffraction lines.

This hydrocarbon gas reforming catalyst (sample) A was thermally treated under the condition of 500°C for 1 h in, for example, a nitrogen atmosphere containing 5% of hydrogen to subject the hydrocarbon gas reforming catalyst to reduction treatment and thus obtain an already reduced hydrocarbon gas reforming catalyst in which fine metal Ni was sufficiently dispersed in SrTiO₃.

### (2) Manufacture of hydrocarbon gas reforming catalyst A according to example of the present invention

Strontium carbonate (SrCO₃) and zirconium oxide (ZrO₂) were weighed so as to attain a molar ratio of 1.0 : 1.0, and further, nickel oxide (NiO) was added and mixed so as to attain a ratio of 2.0 wt.% relative to SrZrO₃ to be produced. Subsequently, a binder was added to this mixture for granulation so as to obtain a spherical granulated body having a diameter of 2 to 5 mm.

The obtained granular body was then fired under the condition of 1100°C for 1 h in air to obtain a hydrocarbon gas reforming catalyst (sample) B.

Thereafter, this hydrocarbon gas reforming catalyst (sample) B was subjected to x-ray diffraction measurement. As a result, it was confirmed that the obtained fired body is a mixed body of NiO phase and SrZrO₃ phase according to the obtained diffraction lines.

This hydrocarbon gas reforming catalyst (sample) B was thermally treated under the condition of 500°C for 1 h in, for example, a nitrogen atmosphere containing 5% of hydrogen to subject the hydrocarbon gas reforming catalyst to reduction treatment and thus obtain an already reduced hydrocarbon gas reforming catalyst in which fine metal Ni was sufficiently dispersed in SrZrO₃.

### (2) Manufacture of hydrocarbon gas reforming catalyst C according to example of the present invention

Strontium carbonate (SrCO₃), titanium oxide (TiO₂), and zirconium oxide (ZrO₂) were weighed so as to attain a molar ratio of 1 : 0.75 : 0.25. Nickel oxide (NiO) was further added and mixed so as to attain a ratio of 2.0 wt.% relative to the mixture of SrTiO3 and SrZrO₃ to be produced.
Subsequently, a binder was added to this mixture for granulation so as to obtain a spherical granulated body having a diameter of 2 to 5 mm.

The obtained granular body was then fired under the condition of 1100°C for 1 h in air to obtain a hydrocarbon gas reforming catalyst (sample) C.

Thereafter, this hydrocarbon gas reforming catalyst (sample) C was subjected to x-ray diffraction measurement. As a result, it was confirmed that the obtained fired body is a mixed body of NiO phase, SrTiO₃ phase, and SrZrO₃ phase according to the obtained diffraction lines.

This hydrocarbon gas reforming catalyst (sample) C was thermally treated under the condition of 500°C for 1 h in, for example, a nitrogen atmosphere containing 5% of hydrogen to subject the hydrocarbon gas reforming catalyst to reduction treatment and thus obtain an already reduced hydrocarbon gas reforming catalyst in which fine metal Ni was sufficiently dispersed in SrTiO₃ and SrZrO₃.

### (4) Manufacture of hydrocarbon gas reforming catalyst D according to example of the present invention

Strontium carbonate (SrCO₃) and titanium oxide (TiO₂) were weighed so as to attain a molar ratio of 1.0 : 1.0, and further, nickel oxide (NiO) was added and mixed so as to attain a ratio of 4.0 wt.% relative to SrTiO₃ to be produced.
Subsequently, a binder was added to this mixture for granulation so as to obtain a spherical granulated body having a diameter of 2 to 5 mm.

The obtained granular body was then fired under the condition of 1100°C for 1 h in air to obtain a hydrocarbon gas reforming catalyst (simple) D.

Thereafter, this hydrocarbon gas reforming catalyst (sample) D was subjected to x-ray diffraction measurement. As a result, it was confirmed that the obtained fired body is a mixed body of NiO phase, SrTiO₃ phase, and SrZrO₃ phase according to the obtained diffraction lines

This hydrocarbon gas reforming catalyst (sample) D was thermally treated under the condition of 500°C for 1 h in, for example, a nitrogen atmosphere containing 5% of hydrogen to subject the hydrocarbon gas reforming catalyst to reduction treatment and thus obtain an already reduced hydrocarbon gas reforming catalyst in which fine metal Ni was sufficiently dispersed SrZrO₃.

### (5) Manufacture of hydrocarbon gas reforming catalyst E for comparison

Strontium carbonate (SrCO₃) and titanium oxide (TiO₂) were weighed so as to attain a molar ratio of 1.0 : 1.0. Subsequently, a binder was added to this mixture for granulation so as to obtain a spherical granulated body having a diameter of 2 to 5 mm.

The obtained granular body was then fired under the condition of 1100°C for 1 h in air to obtain a fired body,

Next, 100 g of the obtained fired body was immersed in an aqueous solution containing 7.7 g of nickel nitrate (Ni (NO₃)₂·6H₂O), dried and thereafter thermally treated under the condition of 500°C for 2 h to obtain a hydrocarbon gas reforming catalyst (sample) E for comparison.

Thereafter, this hydrocarbon gas reforming catalyst (sample) E was subjected to x-ray diffraction measurement. As a result, it was confirmed that the obtained fired body is a mixed body of NiO phase and SrTiO₃ phase according to the obtained diffraction lines.

### (6) Manufacture of hydrocarbon gas reforming catalyst F for comparison

Strontium carbonate (SrCO₃) and titanium oxide (TiO₂) were weighed so as to attain a molar ratio of 1.0 _{:} 1.0. The mixture was then fired under the condition of 1100°C for 1 h in air to obtain a fired body (SrTiO₃ powder).
Subsequently, NiO was added at a ratio of 2.0 wt.% to 100 g of the obtained fired body and a binder was added to this mixture for granulation so as to obtain a spherical granulated body having a diameter of 2 to 5 mm.
The obtained granular body was then fired under the condition of 1100°C for 1 h in air to obtain a hydrocarbon gas reforming catalyst (sample) F for comparison.

This hydrocarbon gas reforming catalyst (sample) F was subjected to x-ray diffraction measurement. As a result, it was confirmed that the obtained fired body is a mixed body of NiO phase and SrTiO₃ phase according to the obtained diffraction lines.

### (7) Manufacture of hydrocarbon gas reforming catalyst G for comparison

The hydrocarbon gas reforming catalyst G of this comparative example was produced by so-called "citric acid method" as described below.

Nickel nitrates, strontium carbonate, and titanium isopropoxide were weighed and mixed so as to attain a molar ratio of Sr/Ti of 1.0 after synthesis and a Ni ratio of 2 wt.% on the basis of NiO.

Excessive amounts of citric acid, ethylene glycol, and water were added to the mixed source materials and heated to 80 to 90°C and mixed to obtain a sol.
Thereafter, the obtained sol was thermally treated under a condition of 400°C for 3 h and 800°C for 2 h to obtain a powder consisting of NiO and SrTiO₃. Subsequently, a binder was added to this powder for granulation so as to obtain a spherical granulated body having a diameter of 2 to 5 mm.

The obtained granular body was then fired under the condition of 800°C for 1 h in air to obtain a hydrocarbon gas reforming catalyst (sample) G for comparison.

This hydrocarbon gas reforming catalyst (sample) G was subjected to x-ray diffraction measurement. As a result, it was confirmed that the obtained fired body is a mixed body of NiO phase and SrTiO₃ phase according to the obtained diffraction lines.

### [2] With respect to reflection spectrum ratio (I₅₀₀/I₇₀₀) of each hydrocarbon gas reforming catalyst

The hydrocarbon gas reforming catalysts obtained in Comparative Examples 5 to 7 (hereinafter, also simply referred to as "catalyst(s)" E to G were sintered bodies showing white color or light green color. On the other hand, the catalysts A to D obtained in Examples 1 to 4 were sintered bodies showing russet color.

The difference of the spectra of respective catalysts (samples) was observed by reflection spectrum measurement. The reflection spectrum measurement was carried out by the following method using UV-2500PC (equipped with integrating sphere option: ISR-240A) manufactured by Shimadzu Corporation.

After being crushed, each sample was pressure-bonded to a sample holder for a powder sample by using a glass block and put in a position of a measurement sample (Sample) of a measurement device. As a standard sample, a BaSO₄ powder was pressure-bonded to a sample holder for a powder sample by using a glass block and put in a standard sample (Reference) position of a measurement device.
The measurement condition of the reflection spectrum was as follows:
(a) Wavelength range: 800 nm to 240 nm
(b) Slit: 5.0 nm
(c) Sampling interval: 0.5 nm
(d) Scanning speed: middle speed

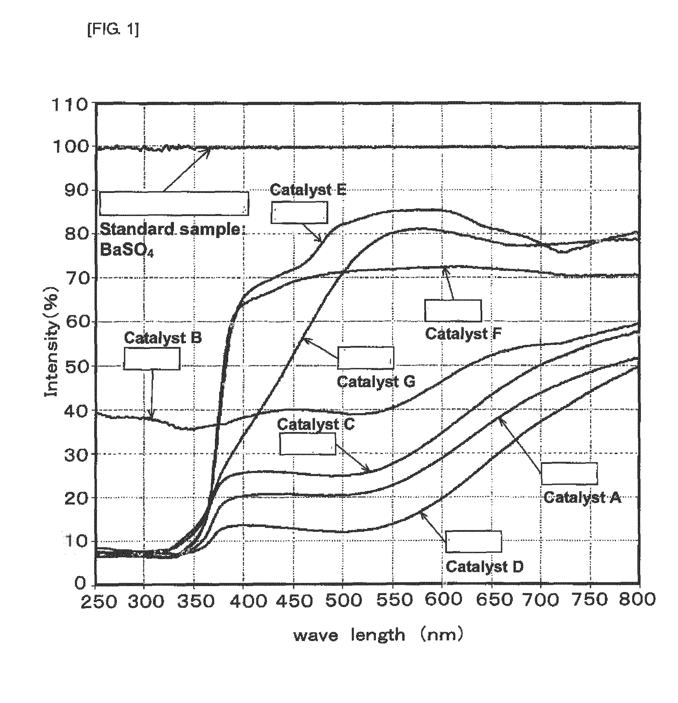

The obtained reflection spectra are shown in FIG. 1. Table 1 shows the reflection intensity ratio I₅₀₀/I₇₀₀ of the reflection intensity I₅₀₀ of each catalyst at 500 nm and the reflection intensity I₇₀₀ of the catalyst at 700 nm. In addition, since the reflectance ratio measurement has measurement dispersion due to the effect of the pressure-bonding method of samples, the reflection intensity ratio I_{500/}I₇₀₀ value is expected to have measurement dispersion of about ±0.05.

**[Table 1]**

| Catalyst | I₅₀₀/I₇₀₀ | Ni content in SrTiO₃ and/or SrZrO₃ |
|---|---|---|
| A | 0.47 | 1.3 to 2.4 parts by mole |
| B | 0.72 | 1.0 to 1.4 parts by mole |
| C | 0.50 | 1.5 to 2.3 parts by mole |
| D | 0.32 | 1.7 to 2.5 parts by mole |
| E | 1.00 | 0.7 to 0.9 parts by mole |
| F | 1.06 | 0.5 to 0.7 parts by mole |
| G | 0.92 | 0.6 to 0.9 parts by mole |

The catalysts A to D of examples of the present invention tended to have low reflection intensity from 450 nm to 550 nm (wavelength band from blue color to green color), high reflection intensity in wavelength band of 650 nm or longer (wavelength band of red color), I_{500/}I₇₀₀ of about 0.3 to 0.8, and russet-colored appearance.

On the other hand, the catalysts E to G of comparative examples had high reflection intensity from 450 nm to 550 nm, I₅₀₀/I₇₀₀ of about 0.9 to 1.1, and white or light green-colored appearance.

The coloration observed in the catalysts A to D of examples was supposedly attributed to that a portion of the Ni component mixed with the catalyst source materials was taken in the crystal structure of SrTiO₃ or SrZrO₃ and formed a solid solution.

### [3] TEM observation and EDX evaluation

The catalysts A to D of examples and the catalysts E to G of comparative examples were observed by TEM (transmission electron microscope) and the amounts of Ni forming a solid solution in the SrTiO₃ grains or SrZrO₃ grains were measured by EDX (energy dispersion x-ray spectrometry). TEM was carried out using HD-2300A manufactured by Hitachi High Technologies Corporation and EDX was carried out using Genesis XM4 manufactured by AMETEK Inc. at an accelerating voltage of 200 kV and a spot diameter (probe diameter) of 0.5 nm.

The measurement method for solid solution amount will be described in detail using the catalyst A of an example as an example.
After being crushed, the catalyst A was dispersed on a sample holder for TEM and a TEM image was observed. Mapping analysis was carried out in the same field of view as that of the TEM image by EDX to confirm the distribution of NiO grains.

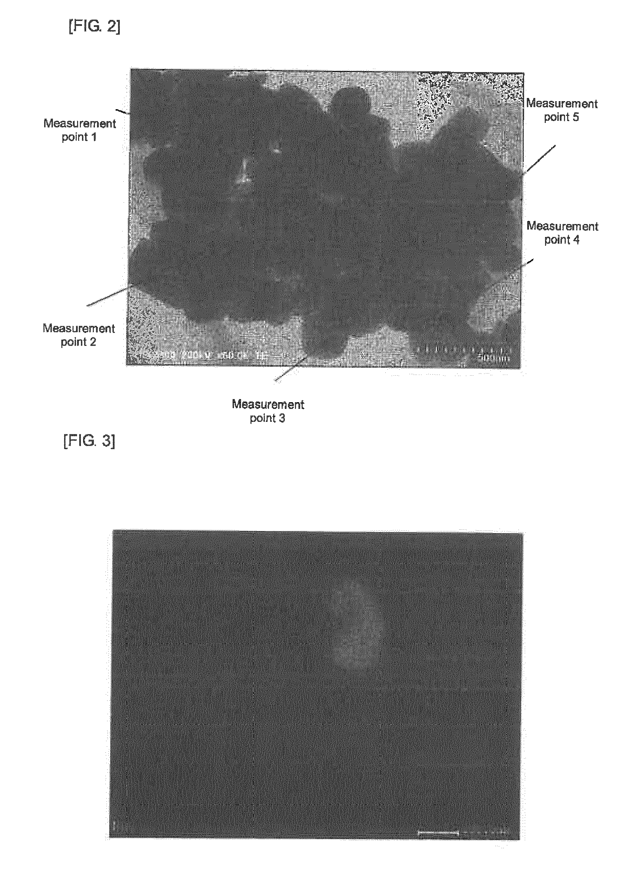

FIG. 2 shows the TEM image of catalysts A and FIG. 3, FIG. 4, and FIG. 5 respectively show the results of EDX mapping of the Ni component, Sr component, and Ti component in the same field of view as that of the TEM image in FIG. 2.

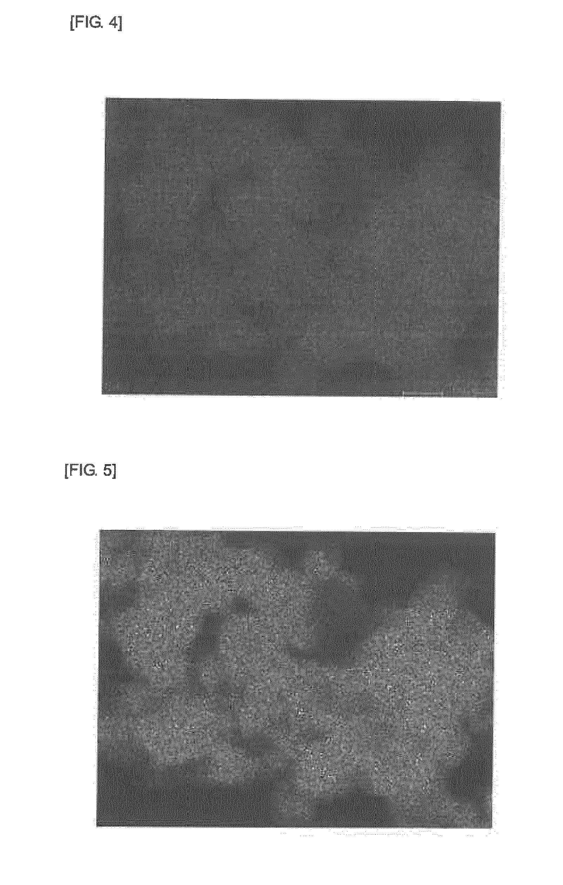

From the EDX mapping image of the Ni component shown in FIG. 3, it can be understood that there existed one grain of NiO, that is, a grain of the Ni component in the field of view of the TEM image of FIG. 2.
From the EDX mapping image of the Sr component shown in FIG. 4 and the EDX mapping image of the Ti component shown in FIG. 5, it can be understood that there existed grains consisting of the Sr component and the Ti component besides the NiO grains, that is, SrTiO₃ grains.
Consequently, it can be understood that the catalyst A was composed of the NiO grains and SrTiO₃ grains and this result corresponds to the detection results of the crystal phase of the catalyst of Example 1 by XRD.

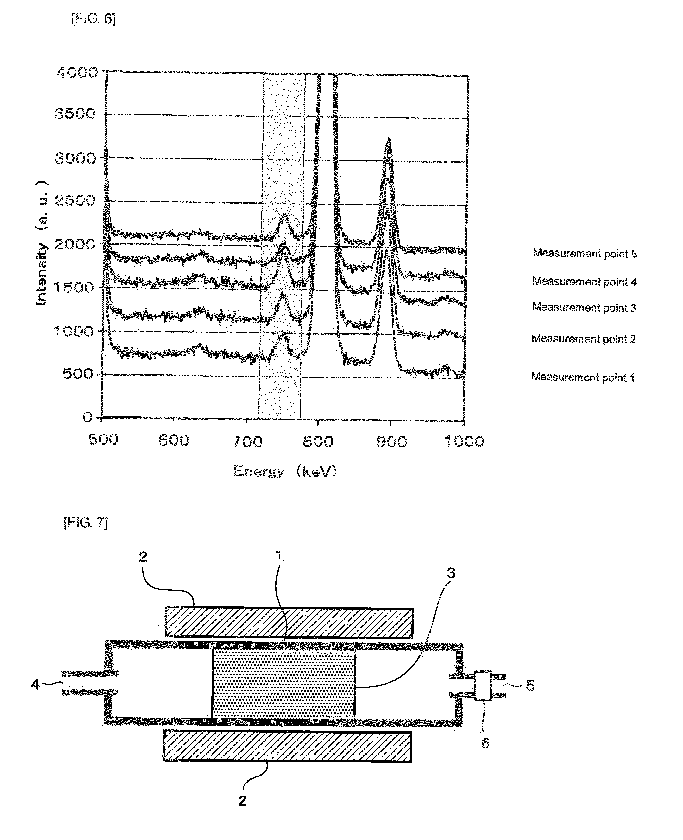

From the EDX mapping measurement of the Ni component shown in FIG. 3, it was confirmed that there was no Ni component in the portion (in the SrTiO₃ grains) other than the NiO grains. However, it was difficult to detect a trace of the Ni component since the EDX mapping measurement was short in the integrated time per each measurement point. Therefore, in order to investigate to what a degree the Ni component was contained (formed a solid solution) in the SrTiO₃ grains, point analysis for prescribed SrTiO₃ grains (measurement points 1 to 5 shown in FIG. 2) was carried out under the condition of an integrated time of 300 seconds. FIG. 6 shows the EDX spectra obtained by the analysis for each point.

In FIG. 6, the peak in a range of 730 keV to 770 keV was attributed to Ni (K line) and it was confirmed that the Ni component existed also in SrTiO₃ grains. "The number of part(s) by mole of Ni atoms to 100 parts by mole of Ti atoms" was calculated from the spectrum surface area ratio of the Ti-K line and Ni-K line in the EDX spectrum data obtained in the above-mentioned manner. Since the molar ratio of Sr to Ti in the synthesized SrTiO3 was 1 : 1, "the number of part(s) by mole of Ni atoms to 100 parts by mole of Ti atoms" was equal to "the number of part(s) by mole of Ni atoms to 100 parts by mole of SrTiO₃ molecules".

The analysis was carried out for other catalysts B to G by the same method to calculate the content of Ni existing in the SrTiO₃ grains or SrZrO₃ grains.

Table 1 shows the values of "the number of part(s) by mole of Ni atoms to 100 parts by mole of SrTiO₃ molecules and SrZrO₃" obtained by 5-point EDX point analysis for each of the catalysts A to G. Since the EDX measurement has about ±0.5 atm % of measurement dispersion, it is assumed that the Ni content shown in Table 1 has measurement dispersion of at maximum about ±0.5 parts by mole.

It was confirmed that the catalysts A to D of examples contained the Ni component in a larger amount in SrTiO₃ or SrZrO₃ (carrier component), a perovskite compound, than the catalysts E to G of comparative examples and particularly that SrTiO₃ grains of the catalyst A contained 1.3 parts by mole or more of Ni and SrZrO₃ grains of the catalyst B contained 1.0 part by mole or more of Ni. Consequently, that the catalysts A to D of examples show russet color is supposedly attributed to that a portion of the Ni component, mixed in the catalyst source materials was taken in the crystal structure of SrTiO₃ or SrZrO₃ and formed a solid solution.

### [4] Reforming test using carbon dioxide and evaluation of properties

The catalysts A to G of examples and comparative examples produced in the above-mentioned manner were used for a reforming test using carbon dioxide to investigate the properties of the respective catalysts.

Each of the catalysts A to G of examples and comparative examples produced in the above-mentioned manner was subjected to reduction treatment by thermal treatment at 500°C/1 h in nitrogen containing 5% of hydrogen to reduce NiO to metal Ni .
X-ray diffraction measurement on the obtained catalysts A to G was carried out after the reduction treatment to confirm that the NiO was all reduced into Ni phase (metal Ni) .

As shown in FIG. 7, a reaction tube 1 made of a metal and equipped with a heater 2 in the outside was filled with 5 cc of each of the already reduced hydrocarbon gas reforming catalysts (A to G) 3 produced in the above-mentioned manner.

The reforming test was carried out by passing a gas mixture of methane and carbon dioxide (CH₄ : CO₂ = 1 : 1 (volume ratio)) as a source material gas through the reaction tube 1 at 20 NL/h (SV = 4000/h) . At that time, the inlet temperature of the source material gas was controlled to be 900°C by the heater 2.

After starting the test, a back pressure valve 6 was adjusted to increase the inner pressure to 0.4 MPa and the gas flow was continued for 8 h as it was.

Also, during the test, the gas obtained through an outlet 5 was introduced into an analyzing apparatus to measure a gas concentration. Further, on completion of the test, the gas flow was stopped to perform cooling, and the hydrocarbon gas reforming catalyst was taken out of the reaction tube 1 to perform thermal weight measurement under air flow. Here, in the thermal weight measurement, reaction of the carbon deposited on the sample and O₂ was carried out as in the following formula (4):

C + O₂ ⇒ 2CO₂ (4)

so as to estimate a decrease in the sample weight as a carbon deposition amount.

Table 2 shows the methane (CH₄) conversion ratio, carbon dioxide (CO₂) conversion ratio, the CO/H₂ ratio (molar ratio) of the gas (reformed gas) obtained in stable state on completion of the reaction, and the carbon deposition amount on completion of the 8 h test.

The methane conversion ratio is a value showing how much part of the introduced methane was converted into other substances (mainly carbon monoxide) by the reforming reaction, and the methane conversion ratio of Table 2 is a value showing a ratio of methane converted into other substances in percentage relative to the introduced methane.
The carbon dioxide conversion ratio is a value showing how much part of the introduced carbon dioxide was converted into other substances (mainly carbon monoxide) by the reforming reaction, and the carbon dioxide conversion ratio of Table 2 is a value showing a ratio of carbon dioxide converted into other substances in percentage relative to the introduced carbon dioxide.

**[Table 2]**

| Catalyst | CH₄ conversion ratio [%] | CO₂ conversion ratio [%] | CO/H₂ ratio | Deposited carbon [wt.%] |
|---|---|---|---|---|
| A | 86.7 | 93.3 | 1.07 | 0 |
| B | 86.1 | 93.3 | 1.07 | 0 |
| C | 86.0 | 93.2 | 1.07 | 0 |
| D | 86.6 | 93.3 | 1.07 | 0 |
| E | 86.7 | 93.3 | 1.07 | 1.6 |
| F | 86.5 | 93.2 | 1.07 | 2.1 |
| G | 86.7 | 93.4 | 1.07 | 1.7 |

As shown in Table 2, in the case of hydrocarbon gas reforming catalysts (hereinafter, simply referred to also as catalysts) A to D satisfying the requirements of the present invention, no carbon deposition was observed at all in the carbon dioxide reforming step under the above-mentioned condition.

On the other hand, the catalysts E to G of comparative examples failing to satisfy the requirements of the present invention showed carbon deposition on their surfaces after the test. In these catalysts E to G, the carbon deposition did not result in clogging of the reaction tube in the 8 h reforming test; however, in the case the test time was prolonged, the carbon deposition amount was increased and it might finally result in difficulty of the gas flow due to the clogging of the reaction tube.

In the case of hydrocarbon gas reforming catalysts A to D of examples of the present invention, no carbon deposition was observed at all in the carbon dioxide reforming step and it supposedly attributed to that Ni formed a solid solution with the relatively large perovskite compound grains (e.g. SrTiO₃ grains in the case of the catalyst A) as shown by the observation and analysis results of TEM (transmission electron microscope) in the stage before the reduction treatment: the metal Ni was deposited by the reduction treatment of the catalyst in that state and highly dispersed: and consequently, carbon deposition resistance was improved.

Further investigation on the results of the experiment shown in Table 2 makes it clear that the constituent components of the catalyst A, catalyst E, catalyst F, and catalyst G shown in Table 2 were the same; however, the catalyst A in which 1.3 parts by mole or more of Ni formed a solid solution in the crystal structure of SrTiO₃ did not cause carbon deposition as described above. It is supposedly attributed to that generally a catalyst having stronger interaction between a metal and a carrier (SrTiO₃, SrZrO₃, or the like, which is a perovskite compound) has high carbon deposition resistance and in the case of the catalyst A satisfying the requirements of the present invention, a larger amount of Ni forming a solid solution with SrTiO₃ than the catalysts E, F, and G of comparative examples was deposited as metal Ni on the carrier surface by the reduction treatment and therefore, the interaction of Ni-SrTiO₃ was strengthened and consequently, the carbon deposition resistance was improved.

Further, that the Ni component was taken in the crystal structure of SrTiO₃ and formed a solid solution in the catalysts A to D of examples whereas no solid solution was formed in the catalysts E to G of comparative examples was supposedly attributed to the difference of their manufacturing methods.
For example, the catalysts E and F of Comparative Example 1 and Comparative Example 2 were produced by adding the Ni component after synthesis of SrTiO₃, whereas the catalyst A of Example 1 was produced by a method of synthesizing SrTiO₃ (SrTiO₃ in which Ni formed a solid solution) by thermal treatment of a mixture of NiO, SrCO₃, and TiO₂ so as to cause reaction of SrCO₃ and TiO₂ by heating in the presence of NiO and therefore, it is supposed that a portion of NiO formed a solid solution in the crystal structure of SrTiO₃ and 1.3 parts by mole or more of Ni was taken in and formed a solid solution in the crystal structure of SrTiO₃.

Further, comparing the production method of the catalyst A of Example 1 with that of the catalyst G of Comparative Example 3, they are same in a point that the Ni component existed in the synthesis stage of SrTiO₃. However, in the production method of the catalyst G of Comparative Example 3, since the solution containing the nitrate and alkoxide is used as a source material, the respective components were evenly dispersed as compared with those in the production method (solid-phase synthesis method) of Example 1, the SrTiO₃ phase was synthesized at a lower temperature (about 500°C) in the case of Comparative Example 3 than that in Example 1. Whereas, in the case of the production method of Example 1, the temperature at which the synthesis of SrTiO₃ phase started was as high as 800°C or higher and in such a high temperature, SrTiO₃ was synthesized from SrCO₃ and TiO₂ in the presence of NiO and therefore, it is supposed that a portion of NiO formed a solid solution in the crystal structure of SrTiO₃ and 1.3 parts by mole or more of the Ni component was taken in and formed a solid solution in the crystal structure of SrTiO₃. Additionally, in the case of the thermal treatment at a temperature as low as about 500°C as in Comparative Example 3, Ni never forms a solid solution with SrTiO_{3.}

In the catalyst B of Example 2, the Ni content in the carrier component (SrTiO₃ grains) was more or less lowered as compared with that in the catalyst A; however, due to the same reason as that of the catalyst A, it is supposed that high carbon deposition resistance was shown as compared with that of the catalysts E to G of comparative examples. Also in the catalyst C containing a mixed carrier of SrTiO₃ and SrZrO₃, high carbon deposition resistance was confirmed as shown in Table 2.

Additionally, in the catalyst D, NiO in an amount 2 times as much as that of the catalyst A was added for the synthesis; however, no significant difference was observed in the solid solution amount of Ni as shown in Table 1 in proportion to addition amount of NiO. Consequently, the limit of the solid solution of Ni was supposed to be about 3 parts by mole to 100 parts by mole of SrTiO₃.

In the case of the catalyst B using SrZrO₃ as a carrier, even when the production was carried out using NiO in the same amount as the catalyst A, the solid solution amount of Ni was smaller than that of the catalyst A. From this fact, in the case of a catalyst using SrZrO₃ as a carrier, the limit of the solid solution of Ni was supposed to be about 2 parts by mole to 100 parts by mole of SrZrO₃.

Consequently, a solid solution consisting of 1 to 3 parts by mole of Ni to 100 parts by mole of SrTiO₃ and a solid solution consisting of 1 to 2 parts by mole of Ni to 100 parts by mole of SrZrO₃ are expected to have high carbon deposition resistance as a hydrocarbon gas reforming catalyst.

A mixed catalyst of both solid solutions like the catalyst C of Example 3 can also cause the same effect of restraining carbon deposition.

A Ni component source material to be used for manufacturing a hydrocarbon gas reforming catalyst of the present invention is not limited to NiO and for example, metal Ni and Ni nitrate can be used as the source material. Even in that case, metal Ni and Ni nitrate are oxidized and converted into NiO at a temperature of less than 800°C in the firing step in atmosphere, so that the same effect as that in the case of using NiO as a source material can be caused.

In the above-mentioned examples, the case where the obtained hydrocarbon gas reforming catalysts were used for carbon dioxide reforming was described and no carbon deposition was observed in the carbon dioxide reforming under the pressure of 0.4 MPa, so that a hydrocarbon gas reforming catalyst of the present invention can be advantageously usable as a catalyst with high carbon deposition resistance in not only carbon dioxide reforming of methane but also water vapor reforming of methane and partial oxidation reaction of methane as compared with a common catalyst.

A hydrocarbon gas reforming catalyst produced by the method of the present invention can be used stably in a range of a ratio of water vapor to methane (water vapor/methane) of 2 or lower in water vapor reforming.

In the case of carrying out carbon dioxide reforming, water vapor reforming, combination reforming with use of both of carbon dioxide and water vapor, or reforming by partial oxidation reaction of methane using a hydrocarbon gas reforming catalyst of the present invention, it is desirable to carry out the reforming generally under the condition of 700°C or higher as the temperature condition and 0.1 MPa or higher as the pressure condition.

In the above-mentioned examples, the case where NiO was reduced to metal Ni by thermal treatment in an atmosphere containing hydrogen was exemplified for the explanation; however, it is possible to reduce NiO to metal Ni by thermal treatment in another reducing atmosphere.

The present invention should not be limited to the above-described examples also in other points, and the specific conditions for producing a hydrocarbon gas reforming catalyst of the prevent invention and the specific conditions for reducing NiO to metal Ni may be variously applied and modified within the scope of the present invention.

### INDUSTRIAL APPLICABILITY

As described above, the present invention can efficiently manufacture a hydrocarbon gas reforming catalyst for efficiently producing a synthesized gas containing hydrogen and carbon monoxide from a hydrocarbon source material gas while restraining carbon deposition when the catalyst is used in any of the reforming reactions of reforming with carbon dioxide in which reforming is carried out by reaction of hydrocarbon and carbon dioxide with each other, reforming with water vapor in which reforming is carried out by reaction of hydrocarbon and water vapor with each other, combination reforming with use of both of carbon dioxide and water vapor, and reforming by partial oxidation reaction of methane.
Also, use of a hydrocarbon gas reforming catalyst of the present invention makes it possible to efficiently produce a synthesized gas containing hydrogen and carbon monoxide from a hydrocarbon source material gas while restraining carbon deposition in the case of any of the reforming reactions; carbon dioxide reforming, water vapor reforming, combination reforming with use of both of carbon dioxide and water vapor, and reforming by partial oxidation reaction of methane.
Therefore, the present invention can be widely applied to the field of hydrocarbon gas reforming catalysts and the field of art related to the manufacture of a synthesized gas containing hydrogen and carbon monoxide.

### DESCRIPTION OF REFERENCE SYMBOLS

1 Reaction tube
2 Heater
3 Hydrocarbon gas reforming catalyst
4 Inlet of reaction tube
5 Outlet of reaction tube
6 Back pressure valve

## Claims

1. A hydrocarbon gas reforming catalyst to be used for reforming a hydrocarbon source material gas and producing a synthesized gas containing carbon monoxide and hydrogen, containing NiO and SrTiO₃ as main components, which comprises a Ni-SrTiO₃ solid solution in which 1 to 3 parts by mole of Ni is dissolved in 100 parts by mole of SrTiO₃,

2. A hydrocarbon gas reforming catalyst to be used for reforming a hydrocarbon source material gas and producing a synthesized gas containing carbon monoxide and hydrogen, containing NiO and SrZrO₃ as main components, which comprises a Ni-SrZrO₃ solid solution in which 1 to 2 parts by mole of Ni is dissolved in 100 parts by mole of SrZrO₃.

3. A hydrocarbon gas reforming catalyst to be used for reforming a hydrocarbon source material gas and producing a synthesized gas containing carbon monoxide and hydrogen, containing NiO, SrTiO₃, and SrZrO₃ as main components, which comprises a Ni-SrTiO₃ solid solution in which Ni is dissolved in SrTiO₃ and a Ni-SrZrO₃ solid solution in which Ni is dissolved in SrZrO₃.

4. The hydrocarbon gas reforming catalyst according to claim 1, wherein a ratio I₅₀₀/I₇₀₀ of reflection intensity I₅₀₀ at a wavelength of 500 nm to reflection intensity I₇₀₀ at a wavelength of 700 nm is within a range of 0.3 to 0.6.

5. The hydrocarbon gas reforming catalyst according to claim 2, wherein a ratio I₅₀₀/I₇₀₀ of reflection intensity I₅₀₀ at a wavelength of 500 nm to reflection intensity I₇₀₀ at a wavelength of 700 nm is 0.8 or lower.

6. The hydrocarbon gas reforming catalyst according to claim 3, wherein a ratio I₅₀₀/I₇₀₀ of reflection intensity I₅₀₀ at a wavelength of 500 nm to reflection intensity I₇₀₀ at a wavelength of 700 nm is within a range of 0.3 to 0.8.

7. A method of manufacturing the hydrocarbon gas reforming catalyst according to any one of claims 1 to 6, comprising a step of producing the Ni-SrTiO₃ solid solution and/or the Ni-SrZrO₃ solid solution, which is a perovskite compound consisting of Ni forming the solid solution, by thermally treating a source material containing Sr and a source material containing Ti and/or Zr in the presence of NiO.

8. The method of manufacturing the hydrocarbon gas reforming catalyst according to claim 7, using SrCO₃ as a source material containing Sr, TiO₂ as the source material containing Ti, and ZrO₂ as a source material containing Zr.

9. An already reduced hydrocarbon gas reforming catalyst obtained by subjecting the hydrocarbon gas reforming catalyst according to any one of claims 1 to 6 to reduction treatment and containing metal Ni and SrTiO₃ and/or SrZrO₃ as main components.

10. The method of manufacturing the already reduced hydrocarbon gas reforming catalyst according to claim 7, wherein reduction treatment of the hydrocarbon gas reforming catalyst according to any one of claims 1 to 6 is carried out by thermal treatment in an atmosphere containing hydrogen.

11. A method of manufacturing a synthesized gas, comprising the steps of: preparing a reformer filled with the catalyst according to any one of claims 1 to 6 and 9; and producing a synthesized gas containing carbon monoxide and hydrogen by passing a hydrocarbon source material gas in combination with a gas containing carbon dioxide and/or water vapor and/or oxygen through the reformer and bringing the gases into contact with the catalyst.
